# FASCICULE DE BREVET EUROPEEN

(11) **EP 3 248 454 B1**
(45) Date de publication et mention de la délivrance du brevet: **04.05.2022**
(21) Numéro de dépôt: 17172645.8
(22) Date de dépôt: 24.05.2017
(51) Int. Cl.: A01G 9/24

(54) **DISPOSITIF ET PROCÉDÉ DE RÉGULATION THERMIQUE POUR SERRE AGRICOLE**
VORRICHTUNG UND VERFAHREN ZUR WÄRMEREGULIERUNG FÜR EIN LANDWIRTSCHAFTLICHES TREIBHAUS
THERMAL CONTROL DEVICE AND METHOD FOR AGRICULTURAL GREENHOUSE

(30) Priorité: 24.05.2016 FR 1654620
(43) Date de publication de la demande: 29.11.2017
(73) Titulaire: AGRITHERMIC, 73375 Le Bourget du Lac (FR)
(72) Inventeur: STAUFFER, Vincent, 73290 La Motte-Servolex (FR)
(74) Mandataire: Croonenbroek, Thomas Jakob

(56) Documents cités:
- DE-A1- 2 739 068
- DE-A1- 3 026 845
- DE-A1-102004 001 139

## Description

La présente invention concerne un dispositif et un procédé de régulation thermique pour serre agricole. L'invention concerne également un module agricole comportant une serre agricole et un tel dispositif. Plus particulièrement, l'invention s'applique à la régulation et à la répartition de la température au sein de la serre agricole au moyen d'une circulation d'air contrôlée.

Afin de pouvoir cultiver des plantes en serre agricole, il est nécessaire d'apporter de la lumière et de la chaleur aux plantes en proportions appropriées. En effet, les plantes ont une croissance optimale dans une gamme de température restreinte qu'il est important de respecter afin d'avoir un rendement maximum au sein de la serre. Les cycles jour/nuit ont également un impact important sur la température au sein d'une serre agricole avec une hausse de la température lors de la journée du fait du rayonnement solaire et une baisse importante de la température la nuit du fait de la dissipation de chaleur. De plus au sein de la serre agricole s'installe une stratification de la température de l'air avec de l'air chaud en hauteur et un air plus frais plus bas.

Pour diminuer les écarts de température, il est ainsi connu de munir la serre agricole de réservoirs accumulateurs de chaleur qui stockent de la chaleur lorsque la température au sein de la serre agricole est élevée ou directement à partir du rayonnement solaire. Lorsque la température diminue, par exemple la nuit ou lorsque la luminosité diminue, les réservoirs accumulateurs de chaleur restituent de la chaleur qu'ils ont emmagasiné. Le document DE3026845 montre notamment de telles serres agricoles avec des réservoirs accumulateurs de chaleur ainsi que des gaines de refoulement.

Cependant, les performances d'un tel système, comportant des réservoirs accumulateurs, peuvent ne pas être suffisant pour compenser les variations de température au sein de la serre agricole et maintenir ladite serre dans la gamme de température désirée.

Afin de résoudre ce problème, il est également connu de munir la serre agricole d'un système de chauffage. Cependant de tels systèmes sont énergivores et coûteux.

Un des buts de la présente invention est donc de résoudre au moins partiellement les inconvénients de l'art antérieur et de proposer un dispositif de régulation thermique d'une serre agricole amélioré.

La présente invention concerne donc un dispositif de régulation thermique pour serre agricole comme décrit dans revendication 1.

La disposition de l'au moins un réservoir accumulateur de chaleur sous la surface de culture permet une diffusion directe de la chaleur à la surface de culture pour limiter les pertes calorifiques liées à la diffusion de la chaleur, ce qui permet d'améliorer la régulation thermique à l'intérieur de la serre agricole.

Selon un aspect de l'invention, la ou les premières entrées d'air sont configurées pour être disposées sous le faîtage de la serre agricole, entre ledit faîtage et une distance de l'ordre de 1 m au dessous d'un cheneau de la serre agricole.

Selon un autre aspect de l'invention, le dispositif de régulation thermique comporte une succession d'unités de régulation destinées à être disposées de manière alignée et à intervalles réguliers dans la serre agricole.

Selon un autre aspect de l'invention, le au moins un réservoir accumulateur de chaleur comporte une multitude de bidons comportant un matériau apte à accumuler et redistribuer de l'énergie calorifique.

Selon un autre aspect de l'invention, la gaine d'aspiration d'air comporte au moins une deuxième entrée d'air disposée entre la au moins une première entrée d'air et la surface de culture.

Selon un autre aspect de l'invention, le dispositif de régulation thermique comporte au moins un moyen d'ouverture et de fermeture monté mobile sur la gaine d'aspiration entre une position d'ouverture et une position de fermeture pour pouvoir ouvrir ou fermer la au moins une première et/ou au moins une deuxième entrée d'air de ladite gaine d'aspiration.

Selon un autre aspect de l'invention, la surface de culture est des tablettes de cultures surélevées par rapport au niveau du sol, le au moins un réservoir accumulateur de chaleur étant placé sur le sol de la serre agricole, sous les surfaces de culture, la gaine de refoulement d'air étant disposée sur le sol de la serre agricole et passant entre des réservoirs accumulateurs de chaleur afin de diffuser l'air aspiré sur leurs parois.

Selon un autre aspect de l'invention, la surface de culture est le sol et que le au moins un réservoir accumulateur de chaleur est enterré sous ladite surface de culture, la au moins une gaine de refoulement d'air comportant des tubulures, afin d'échanger de la chaleur avec ledit au moins un réservoir accumulateur de chaleur.

La présente invention concerne également un procédé de gestion thermique suivant la revendication 9.

Selon un aspect du procédé selon l'invention, lorsque la température de la serre agricole est inférieure à la température au niveau du au moins un réservoir accumulateur de chaleur, et que c la valeur de la différence entre ladite la température de la serre agricole et ladite température au niveau du au moins un réservoir accumulateur de chaleur est supérieure en valeur absolue à une deuxième valeur définie, ou alors que la température de la serre agricole est inférieure à une température de consigne, ledit dispositif est configuré pour entrer dans un cycle de restitution de chaleur en provenance du au moins un réservoir accumulateur de chaleur où l'air est aspiré au niveau de la au moins une première entrée d'air et refoulé au niveau de la au moins une sortie d'air.

Selon un autre aspect du procédé selon l'invention, lorsque la température de la serre agricole est inférieure à la température au niveau du au moins un réservoir accumulateur de chaleur, et que la valeur de la différence entre ladite la température de la serre agricole et ladite température au niveau du au moins un réservoir accumulateur de chaleur est supérieure en valeur absolue à une deuxième valeur définie, ou alors que la température de la serre agricole est inférieure à une température de consigne, ledit dispositif est configuré pour entrer dans un cycle de restitution de chaleur en provenance du au moins un réservoir accumulateur de chaleur où l'air est aspiré au niveau de la au moins une deuxième entrée d'air et refoulé au niveau de la au moins une sortie d'air.

Selon un autre aspect du procédé selon l'invention, lorsque la température du au moins un réservoir accumulateur de chaleur est comprise entre la température de la serre agricole additionnée avec la première valeur définie et ladite température de la serre agricole de laquelle est soustraite la deuxième valeur définie, ou entre la température de la serre agricole additionnée avec la première valeur définie et la température de consigne, ledit dispositif de régulation thermique est à l'arrêt et l'air n'est pas aspiré au niveau de la au moins une première entrée d'air.

La présente invention concerne également un module agricole suivant revendication 13.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en coupe transversale d'une serre agricole comportant un dispositif de régulation thermique selon un premier mode de réalisation,
- la figure 2 montre une représentation schématique en coupe transversale d'une serre agricole comportant un dispositif de régulation thermique selon une première variante du premier mode de réalisation,
- la figure 3 montre une représentation schématique en coupe transversale d'une serre agricole comportant un dispositif de régulation thermique selon une deuxième variante du premier mode de réalisation,
- la figure 4 montre une représentation schématique en coupe vue de dessus d'une serre agricole comportant un dispositif de régulation thermique,
- les figures 5a et 5b montrent des représentations schématiques en coupe transversale d'une serre agricole comportant un dispositif de régulation thermique selon un deuxième mode de réalisation,
- la figure 6 montre une représentation schématique en perspective d'une unité de régulation,
- la figure7 montre une représentation schématique en coupe transversale d'une serre agricole comportant un dispositif de régulation thermique selon un troisième mode de réalisation.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Les serres agricoles 1 sont généralement des structures allongées, pouvant être closes et principalement destinées à la production agricole, par exemple pour la réalisation de travaux de maraîchage ou d'horticulture. Une serre agricole comporte généralement une structure, par exemple métallique ou en bois, et des éléments de couverture tels qu'une bâche en matériau plastique ou des panneaux de verre. Le toit de la serre agricole est maintenu par une structure appelé faîtage qui peut présenter une forme triangulaire comme sur les figures, arrondie ou en ogive.

Des produits cultivés 7 peuvent notamment être disposés sur une surface de culture 15, par exemple des tablettes de cultures 15 surélevées par rapport au niveau du sol.

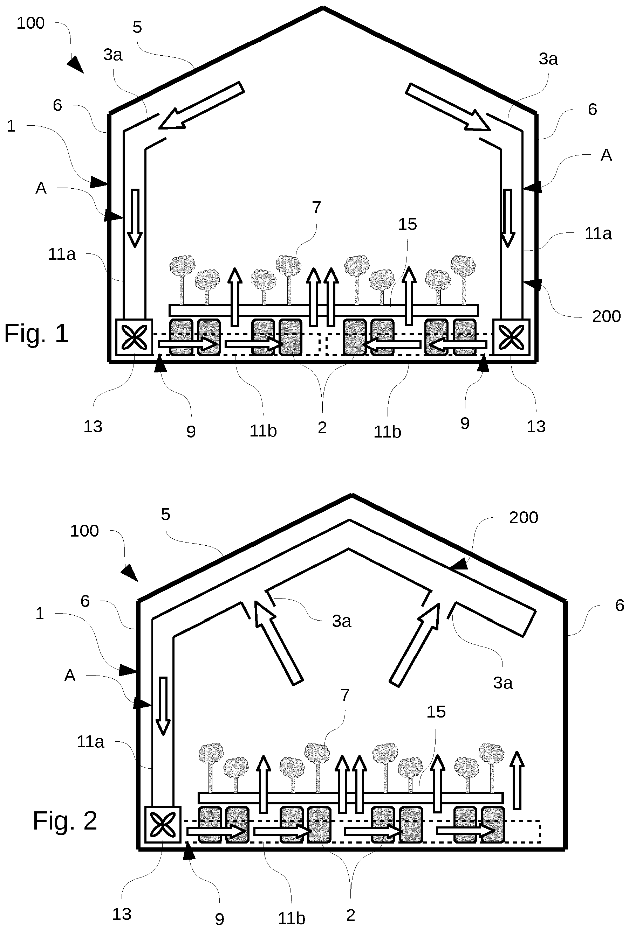

La figure 1 montre une représentation schématique d'un module agricole 100 comportant une serre agricole 1 et un dispositif de régulation thermique 200 installé au sein de la serre agricole 1. Le dispositif de régulation thermique 200 comporte au moins une unité de régulation A, la dite unité de régulation A comprenant :
∘ au moins un réservoir accumulateur de chaleur 2 destiné à être disposé sous une surface de culture 15 de ladite serre agricole 1,
∘ au moins une gaine d'aspiration d'air 11a comprenant au moins une première entrée d'air 3a, ladite première entrée d'air 3a étant destinée à être disposée entre un faîtage 5 de ladite serre et la surface de culture 15,
∘ au moins une gaine de refoulement d'air 11b passant par le au moins un réservoir accumulateur de chaleur 2, ladite au moins une gaine de refoulement d'air 11b comprenant au moins une sortie d'air 9 débouchant dans la serre agricole 1, et
∘ un système de redistribution d'air 13 configuré pour aspirer l'air dans la serre agricole 1 au niveau de la au moins une première entrée d'air 3a de la gaine d'aspiration d'air 11a et pour refouler l'air aspiré au niveau de la au moins sorties d'air 9 de la gaine de refoulement d'air 11b.

Le fait que la au moins une première entrée d'air 3a est disposée entre le faîtage 5 et la surface de culture 15 permet de récupérer l'air chaud situé au dessus de ladite surface de culture 15 et de transférer au moins une partie de la chaleur de cet air au niveau du au moins un réservoir accumulateur de chaleur 2 afin qu'il accumule le plus possible de chaleur. L'air chaud refoulé ensuite par la au moins une sortie d'air 9 se diffuse dans la serre agricole 1 et notamment vers les produits cultivés 7.

Comme illustré sur la figure 1, le au moins un réservoir accumulateur de chaleur 2 peut comporter une multitude de bidons, par exemple en matière plastique ou métallique, comportant un matériau apte à accumuler et redistribuer de l'énergie calorifique, comme par exemple de l'eau ou un matériau à changement de phase. Le au moins un réservoir accumulateur de chaleur 2 peut plus particulièrement être placé sur le sol de la serre agricole 1, sous les surfaces de culture 15. La disposition de l'au moins un accumulateur de chaleur 2 sous les surfaces de culture 15 permet une diffusion directe de la chaleur emmagasinée aux surfaces de culture 15. La diffusion directe de la chaleur aux surfaces de culture 15 permet de limiter les pertes calorifiques et améliore donc la régulation thermique à l'intérieur de la serre agricole 1. Les bidons du au moins un réservoir accumulateur de chaleur 2 peuvent plus particulièrement être de couleur sombre telle que de couleur noire afin de capter le plus possible de chaleur du rayonnement solaire.

Dans l'exemple illustré à la figure 1, la au moins une sortie d'air 9 refoule l'air aspiré au niveau du au moins un réservoir accumulateur de chaleur 2 afin que ledit air réchauffe ledit au moins un réservoir accumulateur de chaleur 2 avant de se diffuser vers les surfaces de cultures 15.

De préférence, la au moins une première entrée d'air 3a est destinée à être disposée sous le faîtage 5, entre ledit faîtage 5 et une distance de l'ordre de 1 m au dessous d'un cheneau de la serre agricole 1. L'air situé dans la partie supérieure de la serre agricole 1 est en effet généralement plus chaud du fait de la stratification de l'air selon sa température et de la convection naturelle en milieu confiné. L'air le plus chaud de la serre agricole 1 sera alors directement envoyé au niveau du au moins un réservoir accumulateur de chaleur 2 et ce, en limitant les déperditions de chaleur avec l'air ambiant au sein de la serre agricole 1.

Dans l'exemple illustré à la figure 1, la serre agricole 1 comporte un dispositif de régulation thermique 200 comprenant, sur la largeur de ladite serre agricole 1, deux unités de régulation A placées en vis à vis. Ces deux unités de régulation A sont disposées de part et d'autre d'une direction longitudinale de la serre agricole 1. Dans cet exemple, les gaines d'aspiration d'air 11a de chaque unité de régulation A sont disposées sur les parois latérales 6 de la serre agricole 1. Les gaines de refoulement d'air 11b s'étendent sur la moitié de la largeur de ladite serre agricole 1, depuis les parois latérales 6 vers le centre de ladite serre agricole 1.

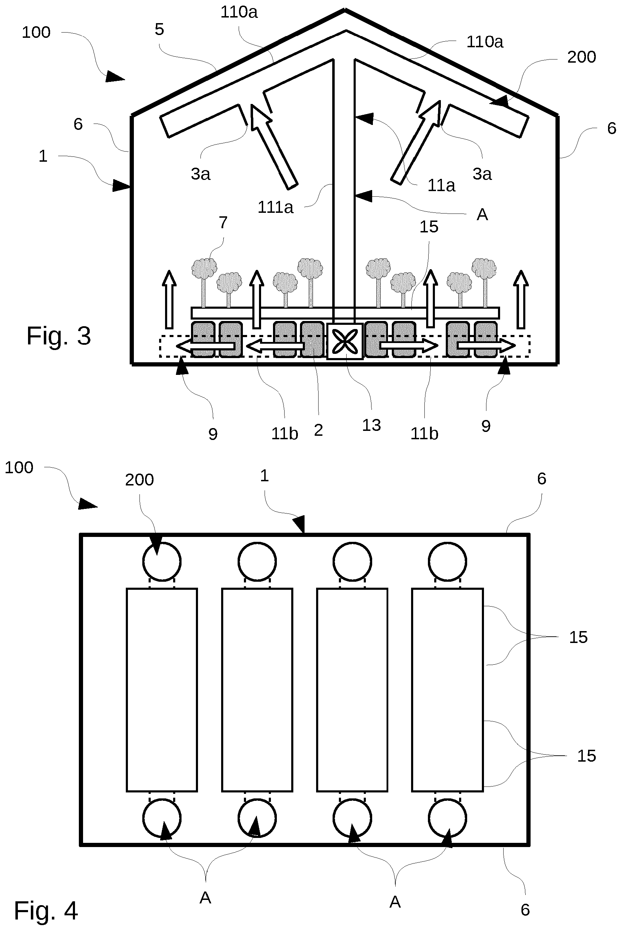

Selon un deuxième exemple illustré aux figures 2 et 3, le dispositif peut ne comporter qu'une seule unité de régulation A s'étendant sur la largeur de la serre agricole 1.

La figure 2 montre une première variante pour laquelle la gaine d'aspiration d'air 11a s'étend contre une des parois latérales 6 de la serre agricole 1 et s'étend également sous et le long du faîtage 5. La gaine d'aspiration d'air 11a peut comporter plusieurs premières entrées d'air 3a réparties sous le faîtage 5. La gaine de refoulement d'air 11b s'étend quant à elle le long de la largeur de la serre agricole 1, d'une paroi latérale 6 à une autre. Cette première variante est notamment utile pour une serre agricole 1 de faible largeur où deux unités de régulation A placées en vis à vis seraient difficiles à installer.

La figure 3 montre une deuxième variante dans laquelle la gaine d'aspiration d'air 11a est disposée au milieu de la largeur de la serre agricole 1. Ladite gaine d'aspiration d'air 11a comporte un tronc principal 111a et deux ramifications 110a s'étendant de part et d'autre du tronc principal 111a dans la direction transversale de la serre agricole 1, sous le faîtage 5. Chaque ramification 110a comporte au moins une première entrée d'air 3a.

Dans cette deuxième variante, l'unité de régulation A comporte deux gaines de refoulement d'air 11b s'étendant de part et d'autre de la gaine d'aspiration d'air 11a centrale. Cette deuxième variante est notamment utile pour une serre agricole 1 dont les parois latérales 6 ne sont pas accessibles, sont obstruées où encore ne sont pas assez solides pour supporter la ou les gaines d'aspiration d'air 11a.

Comme le montre la figure 4, le long de la serre agricole 1, le dispositif de régulation thermique 200 peut notamment comporter une succession d'unités de régulation A destinées à être disposées de manière alignée et à intervalles réguliers dans la direction longitudinale de la serre agricole 1.

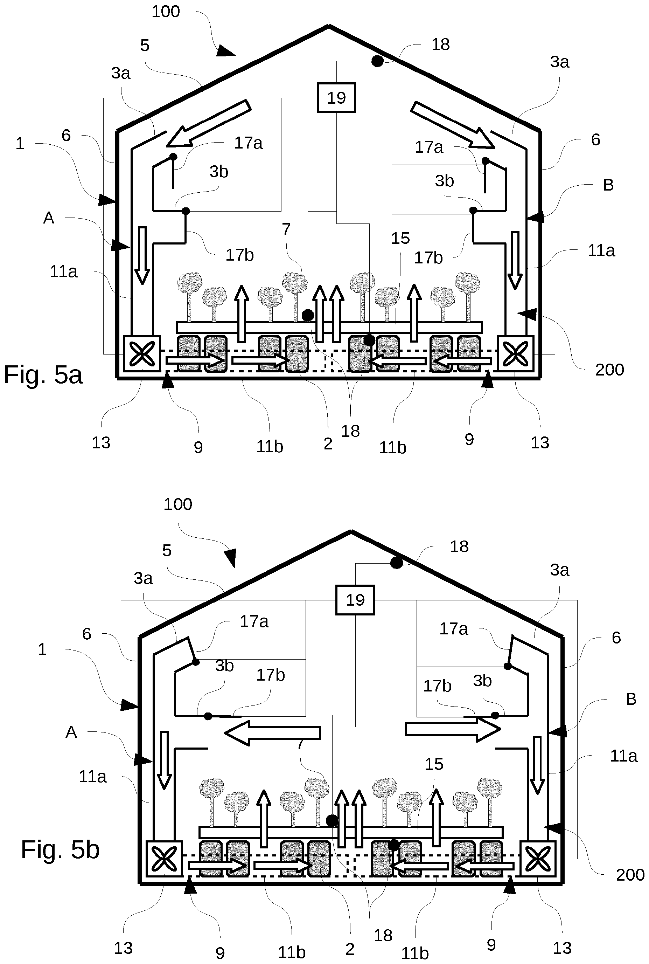

Comme illustré sur les figures 5a et 5b, la gaine d'aspiration d'air 11a peut également comporter au moins une deuxième entrée d'air 3b. Ladite deuxième entrée d'air 3b est disposée entre la au moins une premières entrée d'air 3a et la surface de culture 15.

Cette au moins une deuxième entrée d'air 3b permet d'avoir une aspiration d'air située plus bas dans la serre agricole 1. Cela est particulièrement utile lorsque la température au niveau du faîtage 5 est inférieure à la température au niveau de la surface de culture 15 ou du au moins un réservoir accumulateur de chaleur 2, par exemple la nuit. Dans ce cas de figure, il est alors possible d'aspirer, via la au moins une deuxième entrée d'air 3b, de l'air plus chaud en provenance du au moins un réservoir accumulateur de chaleur 2 et ainsi d'éviter que l'air au niveau de la surface de culture 15 se mélange avec l'air plus froid situé plus haut, au niveau du faîtage 5. L'air au sein de la serre agricole 1, et plus particulièrement au niveau des produits cultivés 7 se refroidira ainsi moins vite.

Afin de contrôler la circulation d'air, le dispositif de régulation thermique 200 peut notamment comporter au moins un moyen d'ouverture et de fermeture 17a, 17b monté mobile sur la gaine d'aspiration 11a entre une position d'ouverture et une position de fermeture pour pouvoir ouvrir ou fermer la au moins une première 3a et/ou au moins une deuxième 3b entrée d'air de ladite gaine d'aspiration 11a. Ce au moins un moyen d'ouverture et de fermeture 17a, 17b peut comporter par exemple des premiers clapets 17a disposés au niveau des premières entrées d'air 3a et des deuxièmes clapets 17b disposés au niveau des deuxièmes entrées d'air 3b.

Le système de redistribution d'air 13 peut, par exemple comporter, au moins un ventilateur configuré pour aspirer l'air dans la ou les gaines de circulation d'air 11a et refouler ledit air dans la ou les gaines de refoulement d'air 11b.

Le système de redistribution d'air 13 peut être disposé à l'interface entre les gaines de circulation d'air 11a et les gaines de refoulement d'air 11b comme illustré sur les différentes figures. Il est néanmoins tout à fait possible d'imaginer que le système de refoulement d'air 13 soit placé différemment, par exemple au niveau de la au moins une première entrée d'air 3a, de la au moins une deuxième entrée d'air 3b et/ou de la au moins une sortie d'air 9.

Le dispositif de régulation thermique 200 peut ainsi permettre une ventilation dans l'ensemble de serre agricole 1 avec un débit pouvant être compris entre 30 et 60 m³/h par m² de la serre agricole 1. Ce débit peut notamment être modulé en fonction de divers paramètres tels que les conditions climatiques extérieures, la température au sein de la serre agricole 1, au niveau du faîtage, ou des produits cultivés 7.

Comme le montrent les figures 5a et 5b, le dispositif de régulation thermique 200 peut également comporter au moins un capteur de température 18 configuré pour mesurer la température de l'air de la serre agricole 1. Avantageusement, ledit dispositif peut comporter plusieurs capteurs de température 18 destinés à être disposés dans la serre agricole 1 notamment afin de connaître la température spécifique à différents endroits tels qu'au niveau de la surface de culture 15, du faîtage 5 et du au moins un réservoir accumulateur de chaleur 2.

Ces capteurs de températures 18 peuvent être reliés à une unité centrale de pilotage 19 qui peut, en fonction des valeurs mesurées, piloter la mise en route ou non du système de redistribution d'air 13 ainsi que le passage d'une position à une autre du au moins un moyen d'ouverture et de fermeture 17a, 17b.

Le dispositif de régulation thermique 200 peut en outre comporter au moins un capteur photosensible afin de mesurer l'ensoleillement.

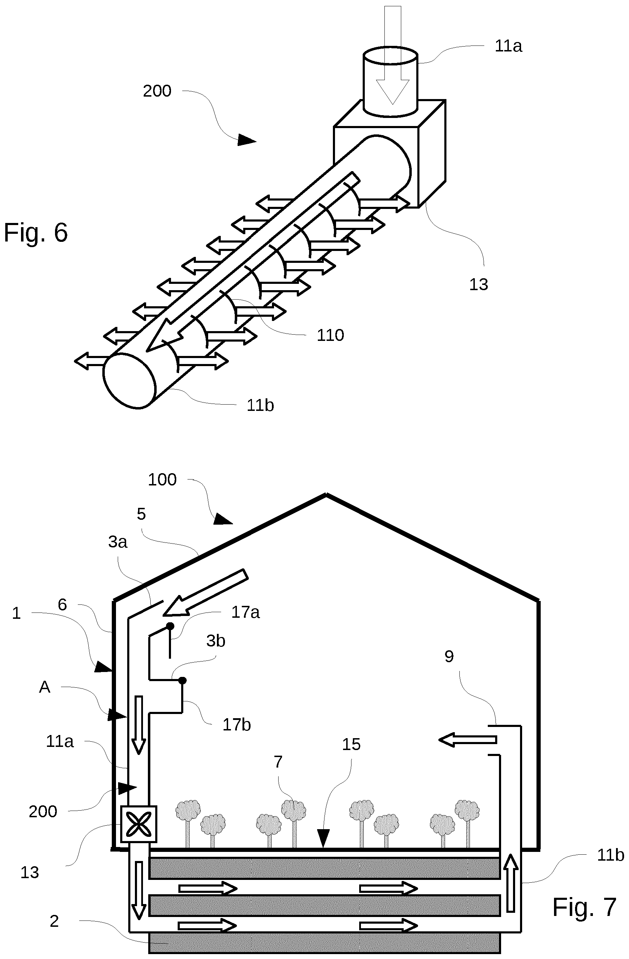

Comme le montre la figure 6, la au moins une gaine de refoulement d'air 11b peut notamment comporter une tubulure externe textile, plastique ou métallique comportant des perforations ou ouvertures 110 pour une meilleure diffusion de l'air au niveau du au moins un réservoir accumulateur de chaleur 2. Ladite gaine de refoulement d'air 11b peut notamment être disposée sur le sol de la serre agricole 1 et passer entre des réservoirs accumulateurs de chaleur 2 afin de diffuser l'air aspiré sur leurs parois. Les ouvertures 110 peuvent être réalisées sur les deux côtés de la gaine de refoulement d'air 11b, comme illustré sur la figure 6, ou encore sur un seul de ses côtés selon les besoins et l'emplacement des réservoirs accumulateurs de chaleur 2.

Selon un autre mode de réalisation illustré à la figure 7, la surface de culture 15 peut être le sol et le au moins un réservoir accumulateur de chaleur 2 peut être une citerne enterrée sous ladite surface de culture 15. La disposition de l'au moins un accumulateur de chaleur 2 sous la surface de culture 15 permet une diffusion directe de la chaleur emmagasinée à la surface de culture 15. Cette diffusion directe permet de limiter les pertes calorifiques liées à la diffusion de la chaleur et permet ainsi l'amélioration de la régulation thermique à l'intérieur de la serre agricole 1. La au moins une gaine de refoulement d'air 11b peut alors comporter des tubulures, par exemple sous forme de tubes plastiques, traversant le réservoir accumulateur de chaleur 2 afin d'échanger de la chaleur avec ce dernier.

Le dispositif de régulation thermique 200 peut également comporter, si besoin, un chauffage additionnel (non représenté).

Le dispositif de régulation thermique 200 peut alors être mis en œuvre selon un procédé de gestion thermique, fonction de la température au sein de la serre agricole 1.

Lorsque la température de la serre agricole 1 est supérieure à la température au niveau du au moins un réservoir accumulateur de chaleur 2, et que la valeur de la différence entre ladite la température de la serre agricole 1 et ladite température au niveau du au moins un réservoir accumulateur de chaleur 2 est supérieure en valeur absolue à une première valeur définie, ledit dispositif est configuré pour entrer dans un cycle d'accumulation de chaleur dans le au moins un réservoir accumulateur de chaleur 2, où l'air est aspiré au niveau de la au moins une première entrée d'air 3a et refoulé au niveau de la au moins une sortie d'air 9. Ce cycle d'accumulation de chaleur 2 est illustré par les figures 1 à 5a.

Ce cycle d'accumulation de chaleur dans le au moins un réservoir accumulateur de chaleur 2 permet de récupérer l'air chaud situé en hauteur dans la serre agricole 1, notamment au niveau du faîtage 5 qui bénéficie de la stratification de l'air selon sa température et de la convection naturelle en milieu confiné. Ce cycle est donc particulièrement efficace au cours des journées ensoleillées pour recharger le au moins un réservoir accumulateur de chaleur 2. Cela permet également de rafraîchir l'air au sein de la serre agricole 1 en journée en absorbant une certaine quantité de chaleur au sein du au moins un réservoir accumulateur de chaleur 2 avant de refouler ledit air vers les produits cultivés, sans avoir besoin nécessairement de ventiler ladite serre agricole 1 en l'ouvrant.

Lorsque la température de la serre agricole 1 est inférieure à la température au niveau du au moins un réservoir accumulateur de chaleur 2, et que la valeur de la différence entre ladite la température de la serre agricole 1 et ladite température au niveau du au moins un réservoir accumulateur de chaleur 2 est supérieure en valeur absolue à une deuxième valeur définie ou alors que la température de la serre agricole 1 est inférieure à une température de consigne, par exemple la nuit ou au cours des journées nuageuses, le dispositif de régulation thermique 200 peut être configuré pour entrer dans un cycle de restitution de chaleur en provenance du au moins un réservoir accumulateur de chaleur 2.

Lors de ce cycle de restitution de chaleur, l'air est également aspiré au niveau de la au moins une première entrée d'air 3a et est refoulé au niveau de la au moins une sortie d'air 9.

Lorsque la température du au moins un réservoir accumulateur de chaleur 2 est comprise entre la température de la serre agricole 1 additionnée avec la première valeur définie et ladite température de la serre agricole 1 de laquelle est soustraite la deuxième valeur définie, ou entre la température de la serre agricole 1 additionnée avec la première valeur définie et la température de consigne, ledit dispositif de régulation thermique 200 est à l'arrêt et l'air n'est pas aspiré au niveau de la au moins une première entrée d'air 3a. L'arrêt du dispositif de régulation thermique 200 peut notamment se faire par arrêt du au moins un système de redistribution d'air 13 ou par fermeture du au moins un moyen d'ouverture et de fermeture 17a de la au moins une premier entrée d'air 3a. Cela permet notamment d'économiser de l'énergie en n'utilisant pas le dispositif de régulation thermique 200 qui n'aurait eu qu'un impact minime sur la régulation de la température.

Dans le cas où la gaine d'aspiration d'air 11a comporte également au moins une deuxième entrée d'air 3b, lorsque la température de la serre agricole 1 est inférieure à la température au niveau du au moins un réservoir accumulateur de chaleur 2, et que la valeur de la différence entre ladite la température de la serre agricole 1 et ladite température au niveau du au moins un réservoir accumulateur de chaleur 2 est supérieure en valeur absolue à la deuxième valeur définie, ou alors que la température de la serre agricole 1 est inférieure à la température de consigne, ledit dispositif peut être configuré pour entrer dans le cycle de restitution de chaleur en provenance du au moins un réservoir accumulateur de chaleur 2. Ce cycle de restitution de chaleur est illustré à la figure 5b.

Lors de ce cycle de restitution de chaleur, l'air est aspiré au niveau de la au moins une deuxième entrée d'air 3b et est refoulé au niveau de la au moins une sortie d'air 9. Cela est notamment possible par la fermeture des moyens d'ouverture et de fermeture 17a de la au moins une première entrée d'air 3a et par l'ouverture des moyens d'ouverture et de fermeture 17b de la au moins une deuxième entrée d'air 3b. Ce cycle de restitution de chaleur permet une meilleure restitution de la chaleur contenue dans les réservoirs accumulateurs de chaleur 2 vers les produits cultivés 7. De plus, cela génère une boucle de convection de l'air qui permet également d'isoler la surface de culture 15 et les produits cultivés 7 de l'air froid situé en hauteur, notamment au niveau du faîtage 5.

La température au niveau des produits cultivés 7 est donc maintenu plus aisément à une température optimale et ce, tout en consommant peu d'énergie.

Le passage d'un cycle à un autre ou à l'arrêt peut également être conditionné par d'autres paramètres comme par exemple l'ensoleillement mesuré par le au moins un capteur photosensible.

Ainsi, on voit bien que le dispositif de régulation thermique 200 de serre agricole 1, de par son architecture, permet une meilleure gestion et régulation de l'air au sein de la serre agricole 1, en ajustant son fonctionnement en fonction de la température de la serre agricole 1.

## Revendications

1. Dispositif de régulation thermique (200) pour serre agricole (1), ledit dispositif comportant au moins une unité de régulation (A), ladite unité de régulation (A) comprenant :
∘ au moins un réservoir accumulateur de chaleur (2) destiné à être disposé sous une surface de culture (15) de ladite serre agricole (1) permettant une diffusion directe de la chaleur à la surface de culture (15),
∘ au moins une gaine d'aspiration d'air (11a) comprenant au moins une première entrée d'air (3a), ladite première entrée d'air (3a) étant destinée à être disposée entre un faîtage (5) de ladite serre et la surface de culture (15),
∘ au moins une gaine de refoulement d'air (11b) passant par le au moins un réservoir accumulateur de chaleur (2), ladite au moins une gaine de refoulement d'air (11b) comprenant au moins une sortie d'air (9) débouchant dans la serre agricole (1), et
∘ un système de redistribution d'air (13) configuré pour aspirer l'air dans la serre agricole (1) au niveau de la au moins une première entrée d'air (3a) de la gaine d'aspiration d'air (11a) et pour refouler l'air aspiré au niveau de la au moins une sortie d'air (9) de la gaine de refoulement d'air (11b).

2. Dispositif de régulation thermique (200) selon la revendication précédente, **caractérisé en ce que** la ou les premières entrées d'air (3a) sont configurées pour être disposées sous le faîtage (5) de la serre agricole (1), entre ledit faîtage (5) et une distance de l'ordre de 1 m au dessous d'un cheneau de la serre agricole (1).

3. Dispositif de régulation thermique (200) selon l'une des revendications précédentes, **caractérisé en ce qu'**il comporte une succession d'unités de régulation (A) destinées à être disposées de manière alignée et à intervalles réguliers dans la serre agricole (1).

4. Dispositif de régulation thermique (200) selon l'une des revendications précédentes, **caractérisé en ce que** le au moins un réservoir accumulateur de chaleur (2) comporte une multitude de bidons comportant un matériau apte à accumuler et redistribuer de l'énergie calorifique.

5. Dispositif de régulation thermique (200) selon l'une des revendications précédentes, **caractérisé en ce que** la gaine d'aspiration d'air (11a) comporte au moins une deuxième entrée d'air (3b) disposée entre la au moins une première entrée d'air (3a) et la surface de culture (15).

6. Dispositif de régulation thermique (200) selon la revendication précédente, **caractérisé en ce qu'**il comporte au moins un moyen d'ouverture et de fermeture (17a, 17b) monté mobile sur la gaine d'aspiration (11a) entre une position d'ouverture et une position de fermeture pour pouvoir ouvrir ou fermer la au moins une première (3a) et/ou au moins une deuxième (3b) entrée d'air de ladite gaine d'aspiration (11a).

7. Dispositif de régulation thermique (200) selon l'une des revendications précédentes, **caractérisé en ce que** la surface de culture (15) est des tablettes de cultures surélevées par rapport au niveau du sol, le au moins un réservoir accumulateur de chaleur (2) étant placé sur le sol de la serre agricole (1), sous les surfaces de culture (15), la gaine de refoulement d'air (11b) étant disposée sur le sol de la serre agricole (1) et passant entre des réservoirs accumulateurs de chaleur (2) afin de diffuser l'air aspirer sur leurs parois.

8. Dispositif de régulation thermique (200) selon l'une des revendications 1 à 6, **caractérisé en ce que** la surface de culture (15) est le sol et que le au moins un réservoir accumulateur de chaleur (2) est enterré sous ladite surface de culture (15), la au moins une gaine de refoulement d'air (11b) comportant des tubulures, afin d'échanger de la chaleur avec ledit au moins un réservoir accumulateur de chaleur (2).

9. Procédé de gestion thermique d'une serre agricole (1) comportant un dispositif de régulation thermique (200) selon l'une des revendications précédentes, dans lequel lorsque la température de la serre agricole (1) est supérieure à la température au niveau du au moins un réservoir accumulateur de chaleur (2), et que la valeur de la différence entre ladite la température de la serre agricole (1) et ladite température au niveau du au moins un réservoir accumulateur de chaleur (2) est supérieure en valeur absolue à une première une valeur définie, ledit dispositif est configuré pour entrer dans un cycle d'accumulation de chaleur dans le au moins un réservoir accumulateur de chaleur (2) où l'air est aspiré au niveau de la au moins une première entrée d'air (3a) et refoulé au niveau de la au moins une sortie d'air (9).

10. Procédé de gestion thermique selon la revendication 9, la serre agricole (1) comportant un dispositif de régulation thermique (200) selon l'une des revendications 1 à 5, dans lequel, lorsque la température de la serre agricole (1) est inférieure à la température au niveau du au moins un réservoir accumulateur de chaleur (2), et que la valeur de la différence entre ladite la température de la serre agricole (1) et ladite température au niveau du au moins un réservoir accumulateur de chaleur (2) est supérieure en valeur absolue à une deuxième valeur définie, ou alors que la température de la serre agricole (1) est inférieure à une température de consigne, ledit dispositif est configuré pour entrer dans un cycle de restitution de chaleur en provenance du au moins un réservoir accumulateur de chaleur (2) où l'air est aspiré au niveau de la au moins une première entrée d'air (3a) et refoulé au niveau de la au moins une sortie d'air (9).

11. Procédé de gestion thermique selon la revendication 9, la serre agricole (1) comportant un dispositif de régulation thermique (200) selon l'une des revendications 5 ou 6, dans lequel, lorsque la température de la serre agricole (1) est inférieure à la température au niveau du au moins un réservoir accumulateur de chaleur (2), et que la valeur de la différence entre ladite la température de la serre agricole (1) et ladite température au niveau du au moins un réservoir accumulateur de chaleur (2) est supérieure en valeur absolue à une deuxième valeur définie, ou alors que la température de la serre agricole (1) est inférieure à une température de consigne, ledit dispositif (200) est configuré pour entrer dans un cycle de restitution de chaleur en provenance du au moins un réservoir accumulateur de chaleur (2) où l'air est aspiré au niveau de la au moins une deuxième entrée d'air (3b) et refoulé au niveau de la au moins une sortie d'air (9).

12. Procédé de gestion thermique selon l'une des revendications 10 à 11, dans lequel, lorsque la température du au moins un réservoir accumulateur de chaleur (2) est comprise entre la température de la serre agricole (1) additionnée avec la première valeur définie et ladite température de la serre agricole (1) soustraite de la deuxième valeur définie, ou entre la température de la serre agricole (1) additionnée avec la première valeur définie et la température de consigne, ledit dispositif de régulation thermique (200) est à l'arrêt et l'air n'est pas aspiré au niveau de la au moins une première entrée d'air (3a).

13. Module agricole comportant (100) une serre agricole (1), **caractérisé en ce qu'**il comporte également un dispositif de régulation thermique (200) selon l'une des revendications 1 à 8 installé dans ladite serre agricole (1).

## Patentansprüche

1. Vorrichtung zur Wärmeregulierung (200) für ein landwirtschaftliches Treibhaus (1), wobei die Vorrichtung wenigstens eine Regulierungseinheit (A) aufweist, wobei die Regulierungseinheit (A) Folgendes umfasst:
o wenigstens einen Wärmesammelspeicher (2), der dazu bestimmt ist, unter einer Kulturfläche (15) des landwirtschaftlichen Treibhauses (1) angeordnet zu sein, der eine direkte Austeilung der Wärme an der Kulturfläche (15) gestattet,
o wenigstens einen Luftansaugkanal (11a), der wenigstens einen ersten Lufteinlass (3a) umfasst, wobei der erste Lufteinlass (3a) dazu bestimmt ist, zwischen einem First (5) des Treibhauses und der Kulturfläche (15) angeordnet zu sein,
o wenigstens einen Luftabgabekanal (11b), der durch den wenigstens einen Wärmesammelspeicher (2) verläuft, wobei der wenigstens eine Luftabgabekanal (11b) wenigstens einen Luftauslass (9) umfasst, der im landwirtschaftlichen Treibhaus (1) mündet, und
o ein Luftumverteilungssystem (13), das dazu ausgebildet ist, die Luft im landwirtschaftlichen Treibhaus (1) an dem wenigstens einen Lufteinlass (3a) des Luftansaugkanals (11a) anzusaugen und die angesaugte Luft am wenigstens einen Luftauslass (9) des Luftabgabekanals (11b) abzugeben.

2. Wärmeregulierungsvorrichtung (200) nach dem vorhergehenden Anspruch, **dadurch gekennzeichnet, dass** der oder die ersten Lufteinlässe (3a) dazu ausgebildet sind, unter dem First (5) des landwirtschaftlichen Treibhauses (1) zwischen dem First (5) und einem Abstand in der Größenordnung von 1 m unter einer Traufe des landwirtschaftlichen Treibhauses (1) angeordnet zu sein.

3. Wärmeregulierungsvorrichtung (200) nach einem der vorhergehenden Ansprüche, **dadurch gekennzeichnet, dass** sie eine Abfolge von Regulierungseinheiten (A) aufweist, die dazu bestimmt sind, in einer Reihe und in regelmäßigen Abständen im landwirtschaftlichen Treibhaus (1) angeordnet zu sein.

4. Wärmeregulierungsvorrichtung (200) nach einem der vorhergehenden Ansprüche, **dadurch gekennzeichnet, dass** der wenigstens eine Wärmesammeispeicher (2) eine Vielzahl von Kanistern aufweist, die ein Material aufweisen, das geeignet ist, Wärmeenergie zu sammeln und umzuverteilen.

5. Wärmeregulierungsvorrichtung (200) nach einem der vorhergehenden Ansprüche, **dadurch gekennzeichnet, dass** der Luftansaugkanal (11a) wenigstens einen zweiten Lufteinlass (3b) aufweist, der zwischen dem wenigstens einen ersten Lufteinlass (3a) und der Kulturfläche (15) angeordnet ist.

6. Wärmeregulierungsvorrichtung (200) nach dem vorhergehenden Anspruch, **dadurch gekennzeichnet, dass** sie wenigstens ein Öffnungs- und Schließmittel (17a, 17b) aufweist, das auf dem Ansaugkanal (11a) zwischen einer Öffnungsposition und einer Schließposition beweglich angebracht ist, um den wenigstens einen ersten (3a) und/oder wenigstens einen zweiten (3b) Lufteinlass des Ansaugkanals (11a) öffnen oder schließen zu können.

7. Wärmeregulierungsvorrichtung (200) nach einem der vorhergehenden Ansprüche, **dadurch gekennzeichnet, dass** die Kulturfläche (15) aus Kulturtischen besteht, die im Verhältnis zur Bodenebene erhöht sind, wobei der wenigstens eine Wärmesammeispeicher (2) auf dem Boden des landwirtschaftlichen Treibhauses (1) unter den Kulturflächen (15) platziert ist, wobei der Luftabgabekanal (11b) auf dem Boden des landwirtschaftlichen Treibhauses (1) angeordnet ist und zwischen Wärmesammeispeichern (2) verläuft, um die angesaugte Luft auf deren Wänden auszuteilen.

8. Wärmeregulierungsvorrichtung (200) nach einem der Ansprüche 1 bis 6, **dadurch gekennzeichnet, dass** die Kulturfläche (15) der Boden ist, und dass der wenigstens eine Wärmesammeispeicher (2) unter der Kulturfläche (15) eingegraben ist, wobei der wenigstens eine Luftabgabekanal (11b) Leitungen aufweist, um Wärme mit dem wenigstens einen Wärmesammeispeicher (2) auszutauschen.

9. Wärmemanagementverfahren eines landwirtschaftlichen Treibhauses (1), das eine Wärmeregulierungsvorrichtung (200) nach einem der vorhergehenden Ansprüche aufweist, wobei, wenn die Temperatur des landwirtschaftlichen Treibhauses (1) höher als die Temperatur an dem wenigstens einen Wärmesammeispeicher (2) ist und der Wert der Differenz zwischen der Temperatur des landwirtschaftlichen Treibhauses (1) und der Temperatur an dem wenigstens einen Wärmesammeispeicher (2) im Absolutwert höher als ein erster festgelegter Wert ist, die Vorrichtung dazu ausgebildet ist, in einen Zyklus zur Speicherung von Wärme in dem wenigstens einen Wärmesammeispeicher (2) einzutreten, bei dem die Luft an dem wenigstens einen ersten Lufteinlass (3a) angesaugt und an dem wenigstens einen Luftauslass (9) abgegeben wird.

10. Wärmemanagementverfahren nach Anspruch 9, wobei das landwirtschaftliche Treibhaus (1) eine Wärmeregulierungsvorrichtung (200) nach einem der Ansprüche 1 bis 5 aufweist, wobei, wenn die Temperatur des landwirtschaftlichen Treibhauses (1) niedriger als die Temperatur an dem wenigstens einen Wärmesammeispeicher (2) ist und der Wert der Differenz zwischen der Temperatur des landwirtschaftlichen Treibhauses (1) und der Temperatur an dem wenigstens einen Wärmesammeispeicher (2) im Absolutwert höher als ein zweiter festgelegter Wert ist, oder die Temperatur des landwirtschaftlichen Treibhauses (1) niedriger als eine Temperaturvorgabe ist, die Vorrichtung dazu ausgebildet ist, in einen Zyklus zur Wiederabgabe von Wärme aus dem wenigstens einen Wärmesammeispeicher (2) einzutreten, bei dem die Luft an dem wenigstens einen ersten Lufteinlass (3a) angesaugt und an dem wenigstens einen Luftauslass (9) abgegeben wird.

11. Wärmemanagementverfahren nach Anspruch 9, wobei das landwirtschaftliche Treibhaus (1) eine Wärmeregulierungsvorrichtung (200) nach einem der Ansprüche 5 oder 6 aufweist, wobei, wenn die Temperatur des landwirtschaftlichen Treibhauses (1) niedriger als die Temperatur an dem wenigstens einen Wärmesammeispeicher (2) ist und der Wert der Differenz zwischen der Temperatur des landwirtschaftlichen Treibhauses (1) und der Temperatur an dem wenigstens einen Wärmesammeispeicher (2) im Absolutwert höher als ein zweiter festgelegter Wert ist, oder die Temperatur des landwirtschaftlichen Treibhauses (1) niedriger als eine Temperaturvorgabe ist, die Vorrichtung (200) dazu ausgebildet ist, in einen Zyklus zur Wiederabgabe von Wärme aus dem wenigstens einen Wärmesammeispeicher (2) einzutreten, bei dem die Luft an dem wenigstens einen zweiten Lufteinlass (3b) angesaugt und an dem wenigstens einen Luftauslass (9) abgegeben wird.

12. Wärmemanagementverfahren nach einem der Ansprüche 10 bis 11, wobei, wenn die Temperatur des wenigstens einen Wärmesammeispeichers (2) zwischen der Temperatur des landwirtschaftlichen Treibhauses (1), die mit dem ersten festgelegten Wert addiert ist, und der Temperatur des landwirtschaftlichen Treibhauses (1), die vom zweiten festgelegten Wert subtrahiert ist, oder zwischen der Temperatur des landwirtschaftlichen Treibhauses (1), die mit dem ersten festgelegten Wert addiert ist, und der Temperaturvorgabe liegt, die Wärmeregulierungsvorrichtung (200) angehalten ist und die Luft nicht an dem wenigstens einen ersten Lufteinlass (3a) angesaugt wird.

13. Landwirtschaftliches Modul aufweisend (100) ein landwirtschaftliches Treibhaus (1), **dadurch gekennzeichnet, dass** es ebenfalls eine Wärmeregulierungsvorrichtung (200) nach einem der Ansprüche 1 bis 8 aufweist, die im landwirtschaftlichen Treibhaus (1) installiert ist.

## Claims

1. Thermal regulation device (200) for an agricultural greenhouse (1), said device comprising at least one regulation unit (A), said regulation unit (A) comprising:
∘ at least one heat-accumulating reservoir (2) intended to be disposed under a cultivation surface (15) of said agricultural greenhouse (1) allowing a direct diffusion of the heat to the cultivation surface (15),
∘ at least one air suction duct (11a) comprising at least one air inlet (3a), said first air inlet (3a) being intended to be disposed between a ridge (5) of said greenhouse and the cultivation surface (15),
∘ at least one air discharge duct (11b) passing through the at least one heat-accumulating reservoir (2), said at least one air discharge duct (11b) comprising at least one air outlet (9) emerging in the agricultural greenhouse (1), and
∘ an air redistribution system (13) configured to suck the air into the agricultural greenhouse (1) at the at least one first air inlet (3a) of the air suction duct (11a) and to discharge the sucked air at the at least one air outlet (9) of the air discharge duct (11b).

2. Thermal regulation device (200) according to the preceding claim, **characterized in that** the first air inlet or inlets (3a) are configured to be disposed under the ridge (5) of the agricultural greenhouse (1), between said ridge (5) and a distance of the order of 1 m below a gutter of the agricultural greenhouse (1).

3. Thermal regulation device (200) according to one of the preceding claims, **characterized in that** it comprises a succession of regulating units (A) intended to be disposed aligned and at regular intervals in the agricultural greenhouse (1).

4. Thermal regulation device (200) according to one of the preceding claims, **characterized in that** the at least one heat-accumulating reservoir (2) comprises a multitude of tanks comprising a material capable of accumulating and redistributing heat energy.

5. Thermal regulation device (200) according to one of the preceding claims, **characterized in that** the air suction duct (11a) comprises at least one second air inlet (3b) disposed between the at least one first air inlet (3a) and the cultivation surface (15).

6. Thermal regulation device (200) according to the preceding claim, **characterized in that** it comprises at least one opening and closing means (17a, 17b) mounted so as to be mobile on the suction duct (11a) between an open position and a closed position to be able to open or close the at least one first (3a) and/or at least one second (3b) air inlet of said suction duct (11a).

7. Thermal regulation device (200) according to one of the preceding claims, **characterized in that** the cultivation surface (15) comprises cultivation trays that are raised with respect to the level of the ground, the at least one heat-accumulating reservoir (2) being placed on the ground of the agricultural greenhouse (1), under the cultivation surfaces (15), the air discharge duct (11b) being disposed on the ground of the agricultural greenhouse (1) and running between heat-accumulating reservoirs (2) in order to diffuse the sucked air on the walls thereof.

8. Thermal regulation device (200) according to one of Claims 1 to 6, **characterized in that** the cultivation surface (15) is the ground and the at least one heat-accumulating reservoir (2) is buried under said cultivation surface (15), the at least one air discharge duct (11b) comprising nozzles, in order to exchange heat with said at least one heat-accumulating reservoir (2).

9. Thermal regulation device for an agricultural greenhouse (1) comprising a thermal regulation device (200) according to one of the preceding claims, wherein, when the temperature of the agricultural greenhouse (1) is above the temperature at the at least one heat-accumulating reservoir (2), and the value of the difference between said temperature of the agricultural greenhouse (1) and said temperature at the at least one heat-accumulating reservoir (2) is greater, in absolute value, than a first defined value, said device is configured to enter into a heat-accumulating cycle in the at least one heat-accumulating reservoir (2) in which the air is sucked in at the least one first air inlet (3a) and discharged at the at least one air outlet (9).

10. Thermal management method according to Claim 9, the agricultural greenhouse (1) comprising a thermal regulation device (200) according to one of Claims 1 to 5, wherein, when the temperature of the agricultural greenhouse (1) is lower than the temperature at the at least one heat-accumulating reservoir (2), and the value of the difference between said temperature of the agricultural greenhouse (1) and said temperature at the at least one heat-accumulating reservoir (2) is greater, in absolute value, than a second defined value, or else the temperature of the agricultural greenhouse (1) is lower than a setpoint temperature, said device is configured to enter into a heat restoration cycle from the at least one heat-accumulating reservoir (2) in which the air is sucked in at the at least one first air inlet (3a) and discharged at the at least one air outlet (9).

11. Thermal management method according to Claim 9, the agricultural greenhouse (1) comprising a thermal regulation device (200) according to one of Claims 5 and 6, wherein, when the temperature of the agricultural greenhouse (1) is lower than the temperature at the at least one heat-accumulating reservoir (2), and the value of the difference between said temperature of the agricultural greenhouse (1) and said temperature at the at least one heat-accumulating reservoir (2) is greater, in absolute value, than a second defined value, or else the temperature of the agricultural greenhouse (1) is lower than a setpoint temperature, said device (200) is configured to enter into a heat restoration cycle from the at least one heat-accumulating reservoir (2) in which the air is sucked in at the at least one second air inlet (3b) and discharged at the at least one air outlet (9).

12. Thermal management method according to one of Claims 10 and 11, wherein, when the temperature of the at least one heat-accumulating reservoir (2) lies between the temperature of the agricultural greenhouse (1) added to the first defined value and said temperature of the agricultural greenhouse (1) subtracted from the second defined value, or between the temperature of the agricultural greenhouse (1) added to the first defined value and the setpoint temperature, said thermal regulation device (200) is stopped and the air is not sucked in at the at least one first air inlet (3a).

13. Agricultural module (100) comprising an agricultural greenhouse (1), **characterized in that** it also comprises a thermal regulation device (200) according to one of Claims 1 to 8 installed in said agricultural greenhouse (1).
